# EUROPEAN PATENT SPECIFICATION

(11) **EP 4 588 800 B1**
(45) Date of publication and mention of the grant of the patent: **09.12.2026**
(21) Application number: 24461509.2
(22) Date of filing: 16.01.2024
(51) Int. Cl.: B64D 11/06, B60N 2/22, B60N 2/42, B60N 2/427

(54) **SEAT RECLINE SYSTEM**
SITZVERSTELLSYSTEM
SYSTÈME D'INCLINAISON DE SIÈGE

(43) Date of publication of application: 23.07.2025
(73) Proprietor: B/E Aerospace Fischer GmbH, 84034 Landshut (DE)
(72) Inventor: KOLODZIEJCZAK, Marcin Szymon, 51-317 Wroc aw (PL)
(74) Representative: Dehns

(56) References cited:
- EP-A1- 4 292 874
- CN-A- 108 674 668
- DE-A1- 2 359 488
- US-A1- 2004 152 572
- US-A1- 2018 099 176
- UNKNOWN: "Quick Release Pins - Monroe", 15 May 2015 (2015-05-15), pages 1 - 7, XP093135186, Retrieved from the Internet <URL:https://web.archive.org/web/20150515110334/https://monroeengineering.com/products-quick-release-pins.php> [retrieved on 20240227]
- ASTORI PAOLO ET AL: "Validation of Numerical Models of a Rotorcraft Crashworthy Seat and Subfloor", POLE SYST?MES ET ENERGIES EMBARQU?S POUR LES TRANSPORTS S2ET, ESTACA LAVAL, 53000 LAVAL, FRANCE, vol. 7, no. 12, 10 December 2020 (2020-12-10), pages 174, XP093134652, ISSN: 2226-4310, DOI: 10.3390/aerospace7120174

## Description

### TECHNICAL FIELD

The present disclosure is concerned with a recline system for enabling the angle of a seat e.g. in a vehicle or aircraft to be adjusted.

### BACKGROUND

Seats in vehicles e.g. road vehicles or aircraft e.g. airplanes and helicopters, have to be designed for safety but also for comfort. Typical, seats have a seat base or pan and a seat back, and may also be provided with armrests and headrests. In some cases, the seat back and the seat pan are separate parts and the position (height, angle) of each can be adjusted independently to optimise the comfort of the user when seated. Other seats, e.g. where the seat structure needs to be particularly light, or easily installed and removed, or where cost and complexity of the seat structure should be minimised, have the seat base and the seat back formed as an integral 'seat bucket'. The seats are usually mounted to a floor via seat legs that are bolted to or otherwise (e.g. via tracks) attached to the floor. Such seats are found, for example, in helicopters. Even for bucket seats, however, the seat can be reclined if required, but this involves changing the angle of the whole seat bucket.

In many applications where such seats are installed, there is also a need for safety features to be provided to the seat. One such feature, that is important in applications where there is a crash risk, is to install an energy absorber system in the seat, such that when there is a sudden impact or force in a given direction in the environment where the seat is installed, some of that impact or force can be absorbed by the energy absorber system rather than being fully transferred to the person in the seat, thus keeping such forces that do pass to the occupant within human tolerance levels. An example of this is seats in a helicopter. Energy absorber systems are provided that absorb a sudden vertical force in the event of a crash, to avoid the full extent of the force jolting through the person in the seat, which could cause serious injury. Various types of energy absorber systems are known. These may be located in the area beneath the seat or between the seat back and the seat base. Where space is restricted, energy absorber systems have also been designed that are located in the seat legs.

In the case of bucket seats, with the energy absorber system located in the seat legs, the seat bucket typically has to be fixed in one place to ensure reliable operation of the energy absorber.

There is a need for a system which enables seats to be reclined even where the energy absorber system is located in or on the seat legs. A recline system is disclosed in US 2004/152572 A1.

### SUMMARY

According to this disclosure, there is provided a seat recline system as defined by claim 1.

Also provided is a seat including such a recline system.

### BRIEF DESCRIPTION

Examples of the seat recline system according to this disclosure will now be described with reference to the drawings. It should be noted that these are examples only and variations are possible within the scope of the claims.
Figure 1 is a side view of a bucket seat to which the seat recline system of the disclosure may be provided.
Figure 2 shows details of a recline system according to the disclosure.
Figure 3 shows the mechanism of the recline system in more detail.
Figure 4 shows a side view of the recline mechanism as shown in Fig. 3.
Figure 5 shows details of a locking mechanism of a recline system according to the disclosure.

### DETAILED DESCRIPTION

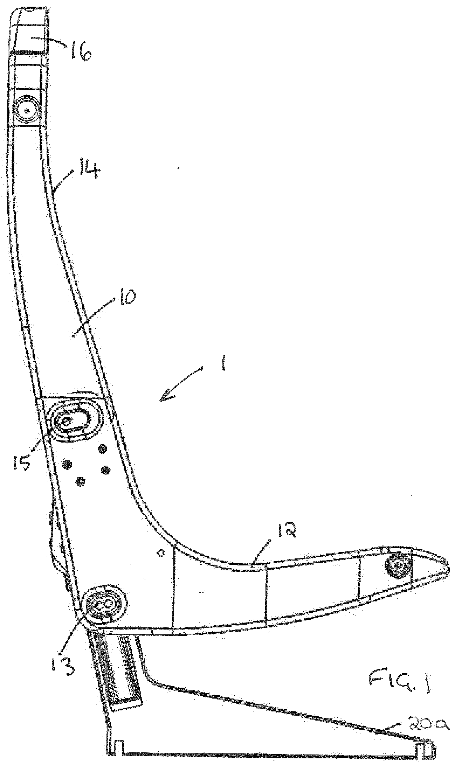

Figure 1 shows a side view of a typical bucket seat 1 e.g. of the type installed in a vehicle e.g. a helicopter. The seat includes a seat body 10 that is shaped to define a seat base 12, on which a user sits, and a seat back 14 against which the user's back can rest when seated. An integral or separate head rest 16 may be provided at the top of the seat back. Although not shown here, arm rests may also be provided. The seat body 10 is mounted to a pair of legs 20a, 20b that mount to the floor where the seat is to be located. The legs may, in use, be fixedly mounted to the floor e.g. by bolts or other fasteners or maybe mounted into tracks or rails on the floor such that the legs can slide along the tracks or rails to different positions on the floor. Such seat designs are known.

As mentioned above, typically, and particularly when an energy absorber system is provided in the legs, the position/orientation of the bucket seat 1 relative to the legs 20a, 20b is fixed.

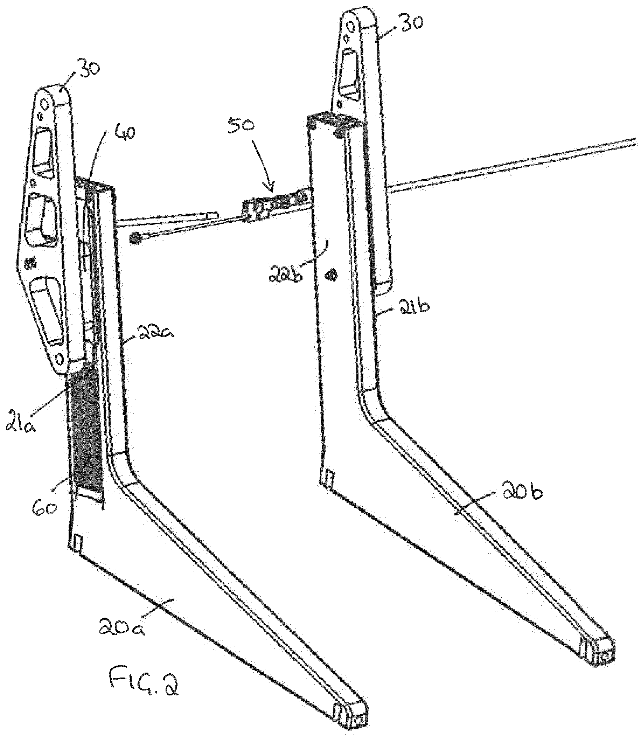

The design according to this disclosure incorporates a recline system into the seat which allows the seat to be positioned at different angles relative to the legs. The recline mechanism, described further with reference to Figs. 2 to 5, is mounted to the legs, between the legs and the seat mounted to the legs.

Fig. 2 shows features of the recline system as mounted to the legs (without the seat mounted, for ease of explanation).

The recline system comprises a recline arm 30 and a recline adjuster 40. A locking mechanism 50 may also be provided. In the example shown, having two legs 20a, 20b, a recline arm and a recline adjuster mechanism are mounted to each leg on the outer side 21a, 21b of the leg, where the opposite, inner sides 22a, 22b of the legs face each other. It is feasible that the recline system could be mounted to a single leg or e.g. a pedestal, for different types of seat. The energy absorber system (not shown in any detail here, as this may be of any known type, but represented by 60) is provided in the leg 20a, 20b.

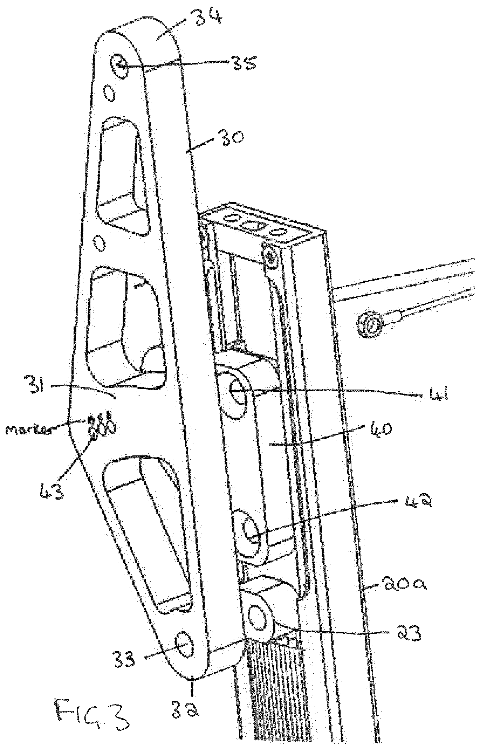

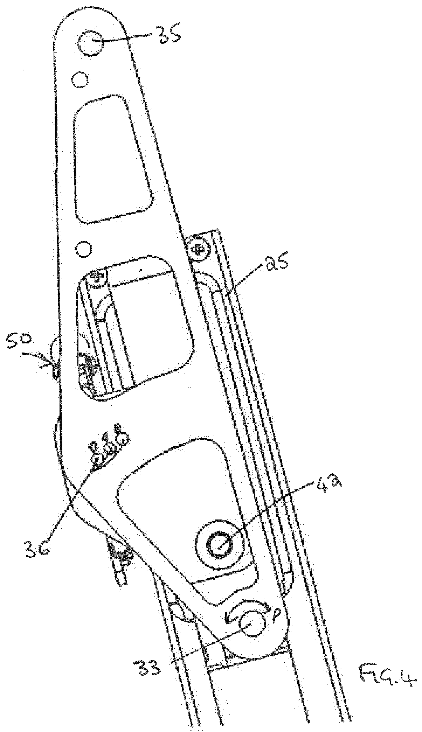

The recline system will be described in more detail with reference to Fig. 3 and Fig. 4.

As mentioned above, the recline system comprises a recline arm 30 and a recline adjuster 40 and these are both arranged to be provided on the outer side 21a, 21b of the leg such that the system is between the seat body 10 and the leg 20a, 20b when the seat is mounted to the leg(s). The recline adjustor 40 is mounted adjacent the outer side of the leg and the recline arm 30 is mounted to an outer side 31 of the recline adjustor 40 and, therefore, between the recline adjuster 40 and the seat body 10 when the seat is assembled to the leg(s), and the recline adjuster 40 is sandwiched between the recline arm 30 and the leg.

The recline arm 30 is a relatively elongate structure having a first end 32 at which a first, or lower mounting point 33 is formed. This mounting point may be in the form of a hole through which a pin or fastener can be passed, or may be in the form of a pin or fastener formed integrally with the arm. The recline arm has a second, or upper end 34 at which a second, or upper mounting point 35 is formed. This mounting point may also be in the form of a hole through which a pin or fastener can be passed, or may be in the form of a pin or fastener formed integrally with the arm.

Located intermediate the first and the second end of the recline arm are one or more recline position detents 36 configured to engage with a recline lock of the locking mechanism 50 depending on the relative rotary position of the recline arm about the pivot point. In the example shown, the recline arm has an essentially triangular form having an apex located between the upper and lower ends, with the detents formed near the apex for engaging with the locking mechanism via the recline adjuster as will be described further below.

The recline arm 30 is attached, at the lower mounting point 33, to a corresponding mounting point 23 formed in the leg which is a lower mounting point to which the seat body, when assembled, also connects. This connection from a lower mounting point (13 in Fig. 1) of the seat body, through the lower mounting point 33 of the recline arm and the lower mounting point 23 of the leg defines a pivot point about which the seat body 10 and the recline arm 30 pivot relative to the leg.

The upper mounting point 35 of the recline arm 30 aligns with an upper mounting point 15 of the seat body and, when assembled, the seat body is also attached to the recline arm by connecting these two upper mounting points (e.g. by a pin or fastener). In this way, the seat body, when mounted to the legs, is attached to the recline arm 30 at the upper and lower mounting points and so is fixed relative to the recline arm but pivotal, with the recline arm, about the lower mounting point, relative to the leg. As the energy absorber system will be mounted in the leg, the seat body and the recline arm are also pivotal relative to the energy absorber.

The recline adjuster 40 is a block that is arranged to be mounted to the outer side 21a, 21b of the leg 20a, 20b and also to be mounted to the energy absorber in the leg. Here, the recline adjustor is mounted to the leg and the energy absorber at two mounting points 41, 42, but other numbers of mounting points are possible.

It can be seen that the recline arm 30 is not fixed to the recline adjuster 40 by any mounting means and the recline arm, therefore, moves about the pivot point 33 relative to the recline adjuster which, in turn, is fixed to the leg. The recline arm is only secured relative to the recline adjuster by the locking mechanism when in a lock position. The recline adjuster 40 is provided with hole 43 extending through the block through which a locking pin 51 of the locking mechanism extends to engage in a respective detent in the recline arm 30 at a predetermined recline position. In the example shown, the recline arm has three detents 36 to define three different recline positions (here identified, by way of example only, as '0', '4' and '8' degrees). Depending on user requirements, there can be any number of detents at any desired spacing.

The locking mechanism 50 enables the recline arm (and therefore the seat body to which it is attached) to pivot (see arrow P in Fig. 4) about the pivot point 33, relative to the leg (and therefore, the energy absorber in the leg) and relative to the recline adjuster 40 mounted to the leg, when in a release position, and to lock the recline arm (and, therefore, the seat body 10) relative to the recline adjuster 40 (and hence the leg and the energy absorber) by engagement of the locking pin 51 in a respective detent 36 in the recline arm 30.

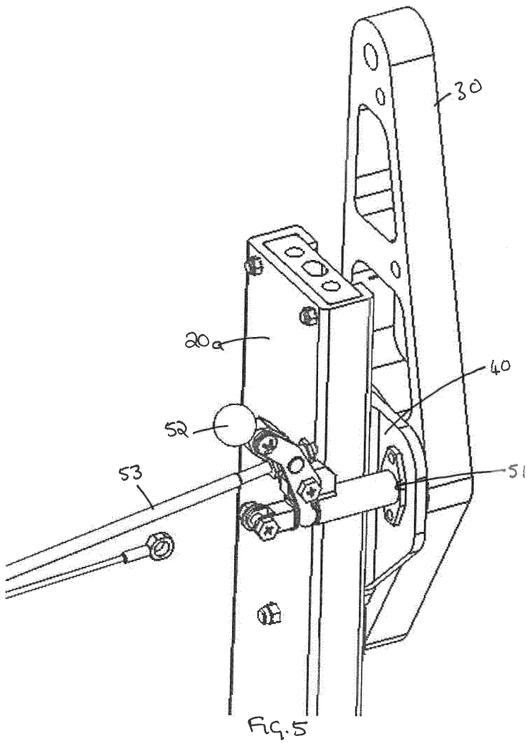

The locking mechanism is best seen in the example shown in Fig. 5. The locking mechanism is secured to the recline adjuster 40 and comprises a lever or handle 52 connected to the locking pin 51, and the locking pin 51 is aligned with the hole 43 through the recline adjuster 40. The lever 52 is configured such that movement of the lever by a user causes movement of the locking pin 51 relative to the recline adjuster and, more specifically, relative to the hole 43. In a release position of the lever 52, the locking pin 51 is retracted with respect to the hole and so does not protrude through the hole towards the recline arm, leaving the recline arm free to pivot. When the lever 52 is in a locking position, the locking pin 51 protrudes through the hole towards the recline arm and engages a detent in the arm when the detent is aligned with the locking pin. In an example, the lever is spring biased to the locking position. When the user wishes to recline the seat (or return the seat to a more upright position from a reclined position), the user moves the lever to the release position, drawing the pin away from the detent. The user can then move the recline arm (and the seat) relative to the leg to a different angular position. This can be effected by the user applying force to the seat, e.g. with the hand or by leaning on the seat.

One or more stops 25 may be mounted to the leg to prevent the recline arm moving too far about the pivot point in either or both directions.

The features of the recline system described may be provided on each leg, where the seat has two legs. For ease of use, the levers of the respective mechanisms may be connected e.g. by a cable 53 such that operation of one lever by the user will cause the other lever to move via the cable. In this way, the seat recline system can be operated with one hand.

As can be seen, the recline arm is only attached to the energy absorber in the leg at the lower mounting point, which is also the recline system pivot point. The recline arm is attached directly to the seat body and is pivotal relative to the seat legs (and, therefore, to the energy absorber). In this way, the seat is attached to the recline system and also to the energy absorber, but without interfering with the energy absorber. The seat therefore retains the energy absorber safety feature whilst also being able to recline. The system enables the energy absorber to be retained in the leg, thus saving space, and the system can be used on existing seats.

## Claims

1. A seat recline system comprising:
one or more seat legs (20a, 20b) configured such that a seat body (10) can be mounted thereto, in use; and, for each of the one or more seat legs:
a recline arm (30) having a first end (32) pivotally mounted to the seat leg and configured to be fixedly mounted to a first mounting point of the seat body, in use, and a second end (34) configured to be fixedly mounted to a second mounting point of the seat body, in use, the recline arm further comprising one or more detents (36) formed on an inner side of the arm intermediate the first end and the second end;
a recline adjuster (40) located between the recline arm (30) and the seat leg (20a, 20b), the recline adjuster fixedly attached to the leg, and wherein the recline arm (30) is free to pivot about the first mounting point relative to the recline adjuster (40), wherein the recline adjuster (40) has a hole (43) therethrough arranged to align with the one or more detents (36) in the recline arm (30) at predetermined pivot positions of the recline arm relative to the recline adjuster; and
a locking system (50) comprising a locking pin (51) and
**characterised in that** the locking system further comprises a lever (52) arranged to move the locking pin (51) relative to the hole (43) in the recline adjuster, between a locking position in which the locking pin extends through the hole to engage in a detent (36) of the one or more detents when a detent aligns with the hole, and a release position in which the locking pin does not extend through the hole (43); and
further comprising an energy absorber (60) located within each of the one or more legs.

2. The system of claim 1, wherein the recline arm (30) has an elongate triangular shape having an apex between the first end and the second end, wherein the one or more detents are arranged adjacent the apex.

3. The system of any preceding claim, wherein the recline adjuster (40) is mounted to an outer side of the seat leg and the recline arm (30) is adjacent an outer side of the recline adjuster such that when the seat body (10) is mounted to the leg, the recline arm is located between the seat body and the recline adjuster and the recline adjuster is located between the recline arm and the seat leg.

4. The system of any preceding claim wherein the first mounting point and the second mounting point are defined by respective holes on the recline arm.

5. The system of claim 4, further comprising fasteners through the respective holes.

6. The system of any preceding claim, wherein said one or more detents comprises a plurality of detents.

7. The system of claim 6, wherein the recline arm comprises markers adjacent each of the plurality of detents indicative of a recline position or angle.

8. The system of any preceding claim, wherein the lever (52) is biased to the locking position.

9. The system of any preceding claim, further comprising a stop (25) to limit the pivot range of the recline arm.

10. The system of any preceding claim having two legs (20a, 20b).

11. The system of claim 10, further comprising a cable (53) connecting the lever (52) of one leg with the lever of the other leg.

12. The system of any preceding claim, further comprising the seat body (10).

13. A seat having a seat recline system as claimed in any preceding claim.

14. The seat of claim 13 being an aircraft seat.

## Patentansprüche

1. Ein Sitzneigungssystem, umfassend:
ein oder mehrere Sitzbeine (20a, 20b), die derart ausgebildet sind, dass ein Sitzkörper (10) im Gebrauch daran montiert werden kann; und, für jedes der ein oder mehreren Sitzbeine:
einen Neigungsarm (30) mit einem ersten Ende (32), das schwenkbar an dem Sitzbein angebracht ist und dazu ausgebildet ist, im Gebrauch an einem ersten Befestigungspunkt des Sitzkörpers fest montiert zu werden, und einem zweiten Ende (34), das dazu ausgebildet ist, im Gebrauch an einem zweiten Befestigungspunkt des Sitzkörpers fest montiert zu werden, wobei der Neigungsarm ferner ein oder mehrere Rasten (36) aufweist, die an einer Innenseite des Arms zwischen dem ersten Ende und dem zweiten Ende ausgebildet sind;
einen Neigungsversteller (40), der zwischen dem Neigungsarm (30) und dem Sitzbein (20a, 20b) angeordnet ist, wobei der Neigungsversteller fest an dem Bein angebracht ist, und wobei der Neigungsarm (30) um den ersten Befestigungspunkt relativ zum Neigungsversteller (40) frei verschwenkbar ist, wobei der Neigungsversteller (40) ein Loch (43) aufweist, das sich durch ihn hindurch erstreckt und dazu angeordnet ist, sich bei vorbestimmten Schwenkpositionen des Neigungsarms relativ zum Neigungsversteller mit der einen oder den mehreren Rasten (36) im Neigungsarm auszurichten; und
ein Verriegelungssystem (50), das einen Verriegelungsstift (51) umfasst, und **dadurch gekennzeichnet, dass** das Verriegelungssystem ferner einen Hebel (52) umfasst, der dazu angeordnet ist, den Verriegelungsstift (51) relativ zum Loch (43) im Neigungsversteller zwischen einer Verriegelungsposition, in der sich der Verriegelungsstift durch das Loch hindurch erstreckt, um in eine Raste (36) der einen oder mehreren Rasten einzugreifen, wenn sich eine Raste mit dem Loch ausrichtet, und einer Freigabeposition, in der sich der Verriegelungsstift nicht durch das Loch (43) hindurch erstreckt, zu bewegen; und
ferner umfassend einen Energieabsorber (60), der innerhalb jedes der ein oder mehreren Beine angeordnet ist.

2. Das System nach Anspruch 1, wobei der Neigungsarm (30) eine längliche dreieckige Form mit einer Spitze zwischen dem ersten Ende und dem zweiten Ende aufweist, wobei die ein oder mehreren Rasten benachbart zur Spitze angeordnet sind.

3. Das System nach einem der vorherigen Ansprüche, wobei der Neigungsversteller (40) an einer Außenseite des Sitzbeins montiert ist und der Neigungsarm (30) benachbart zu einer Außenseite des Neigungsverstellers angeordnet ist, derart, dass dann, wenn der Sitzkörper (10) an dem Bein montiert ist, der Neigungsarm zwischen dem Sitzkörper und dem Neigungsversteller angeordnet ist und der Neigungsversteller zwischen dem Neigungsarm und dem Sitzbein angeordnet ist.

4. Das System nach einem der vorherigen Ansprüche, wobei der erste Befestigungspunkt und der zweite Befestigungspunkt durch jeweilige Löcher am Neigungsarm definiert sind.

5. Das System nach Anspruch 4, ferner umfassend Befestigungselemente durch die jeweiligen Löcher.

6. Das System nach einem der vorherigen Ansprüche, wobei die eine oder mehreren Rasten eine Vielzahl von Rasten umfassen.

7. Das System nach Anspruch 6, wobei der Neigungsarm Markierungen benachbart zu jeder der Vielzahl von Rasten umfasst, die eine Neigungsposition oder einen Neigungswinkel anzeigen.

8. Das System nach einem der vorherigen Ansprüche, wobei der Hebel (52) in die Verriegelungsposition vorgespannt ist.

9. Das System nach einem der vorherigen Ansprüche, ferner umfassend einen Anschlag (25), um den Schwenkbereich des Neigungsarms zu begrenzen.

10. Das System nach einem der vorherigen Ansprüche mit zwei Beinen (20a, 20b).

11. Das System nach Anspruch 10, ferner umfassend ein Kabel (53), das den Hebel (52) eines Beins mit dem Hebel des anderen Beins verbindet.

12. Das System nach einem der vorherigen Ansprüche, ferner umfassend den Sitzkörper (10).

13. Ein Sitz mit einem Sitzneigungssystem nach einem der vorherigen Ansprüche.

14. Der Sitz nach Anspruch 13, bei dem es sich um einen Flugzeugsitz handelt.

## Revendications

1. Un système d'inclinaison de siège comprenant :
un ou plusieurs pieds de siège (20a, 20b) configurés de telle sorte qu'un corps de siège (10)
puisse y être monté, en utilisation ; et, pour chacun des un ou plusieurs pieds de siège :
un bras d'inclinaison (30) ayant une première extrémité (32) montée pivotante sur le
pied de siège et configurée pour être montée de façon fixe sur un premier point de
montage du corps de siège, en utilisation, et une seconde extrémité (34) configurée
pour être montée de façon fixe sur un second point de montage du corps de siège, en
utilisation, le bras d'inclinaison comprenant en outre un ou plusieurs crans (36) formés sur un côté intérieur du bras entre la première extrémité et la seconde extrémité ;
un régleur d'inclinaison (40) situé entre le bras d'inclinaison (30) et le pied de siège (20a, 20b), le régleur d'inclinaison étant fixé de façon fixe au pied, et dans lequel le bras d'inclinaison (30) est libre de pivoter autour du premier point de
montage par rapport au régleur d'inclinaison (40), dans lequel le régleur d'inclinaison
(40) présente un trou (43) le traversant, agencé pour s'aligner avec le ou les crans
(36) du bras d'inclinaison à des positions pivotées prédéterminées du bras d'inclinaison par rapport au régleur d'inclinaison ; et
un système de verrouillage (50) comprenant une broche de verrouillage (51) et
**caractérisé en ce que** le système de verrouillage comprend en outre un levier
(52) agencé pour déplacer la broche de verrouillage (51) par rapport au trou (43) dans
le régleur d'inclinaison, entre une position de verrouillage dans laquelle la broche de
verrouillage traverse le trou pour venir en prise avec un cran (36) parmi le ou les
crans lorsqu'un cran s'aligne avec le trou, et une position de dégagement dans
laquelle la broche de verrouillage ne traverse pas le trou (43) ; et
comprenant en outre un absorbeur d'énergie (60) situé à l'intérieur de chacun des un ou
plusieurs pieds.

2. Le système selon la revendication 1, dans lequel le bras d'inclinaison (30) présente une forme triangulaire allongée ayant un sommet entre la première extrémité et la seconde extrémité, dans lequel le ou les crans sont disposés à proximité du sommet.

3. Le système selon l'une quelconque des revendications précédentes, dans lequel le régleur
d'inclinaison (40) est monté sur un côté extérieur du pied de siège et le bras d'inclinaison
(30) est adjacent à un côté extérieur du régleur d'inclinaison de telle sorte que, lorsque le
corps de siège (10) est monté sur le pied, le bras d'inclinaison est situé entre le corps de siège et le régleur d'inclinaison et le régleur d'inclinaison est situé entre le bras d'inclinaison et le pied de siège.

4. Le système selon l'une quelconque des revendications précédentes, dans lequel le premier
point de montage et le second point de montage sont définis par des trous respectifs sur le
bras d'inclinaison.

5. Le système selon la revendication 4, comprenant en outre des fixations à travers les trous
respectifs.

6. Le système selon l'une quelconque des revendications précédentes, dans lequel ledit un ou plusieurs crans comprend une pluralité de crans.

7. Le système selon la revendication 6, dans lequel le bras d'inclinaison comprend des
repères adjacents à chacun de la pluralité de crans, indicatifs d'une position ou d'un angle
d'inclinaison.

8. Le système selon l'une quelconque des revendications précédentes, dans lequel le levier (52) est sollicité vers la position de verrouillage.

9. Le système selon l'une quelconque des revendications précédentes, comprenant en outre une butée (25) pour limiter la plage de pivotement du bras d'inclinaison.

10. Le système selon l'une quelconque des revendications précédentes, comportant deux pieds (20a, 20b).

11. Le système selon la revendication 10, comprenant en outre un câble (53) reliant le levier (52) d'un pied au levier de l'autre pied.

12. Le système selon l'une quelconque des revendications précédentes, comprenant en outre le corps de siège (10).

13. Un siège comportant un système d'inclinaison de siège selon l'une quelconque des revendications précédentes.

14. Le siège selon la revendication 13 étant un siège d'aéronef.
